# EUROPÄISCHE PATENTANMELDUNG

(11) **EP 2 177 931 A2**
(43) Veröffentlichungstag der Anmeldung: **21.04.2010**
(21) Anmeldenummer: 09012842.2
(22) Anmeldetag: 10.10.2009
(51) Int. Cl.: G01S 7/481, G01S 17/89

(54) **Vorrichtung zur Aufnahme von Bildern einer Objektszene**

(30) Priorität: 17.10.2008 DE 102008052064
(71) Anmelder: Diehl BGT Defence GmbH & Co.KG, 88662 Überlingen (DE)
(72) Erfinder: Tholl, Hans Dieter, Dr., 88690 Uhldingen-Mühlhofen (DE); Romasew, Eugen, 88662 Überlingen (DE); Barenz, Joachim, Dr., 88662 Überlingen (DE)
(74) Vertreter: Diehl Patentabteilung

(57) **Zusammenfassung**

Die Erfindung geht aus von einer Vorrichtung (2) zur Aufnahme von Bildern einer Objektszene (4) mit einer Beleuchtungseinheit (6) zum Beleuchten der Objektszene (4) mit mehreren Beleuchtungselementen (14) und einer Optik (10) zum Lenken von aus der Objektszene (4) reflektierter Strahlung der Beleuchtungselemente (14) auf einen Detektor (8).

Um eine einfache und kompakte Kamera zu erreichen, wird vorgeschlagen, dass die Vorrichtung ein Markiermittel (18) umfasst zum Markieren der Strahlung aus jedem der Beleuchtungselemente (14) und ein Auswertemittel (20) zum Unterscheiden der reflektierten Strahlung der einzelnen Beleuchtungselemente (14) anhand der Markierung.

## Beschreibung

Die Erfindung betrifft eine Vorrichtung zur Aufnahme von Bildern einer Objektszene mit einer Beleuchtungseinheit zum Beleuchten der Objektszene mit mehreren Beleuchtungselementen und einer Optik zum Lenken von aus der Objektszene reflektierter Strahlung der Beleuchtungselemente auf einen Detektor.

Laserradare, also Sensoren, die eine Tiefenabtastung durchführen, arbeiten üblicherweise mit einer modulierten Laserquelle und einem Einelementdetektor, die im Spotmodus auf ein Objekt gerichtet sind oder über eine Szene gescannt werden. Ist die Zeitspanne zwischen zwei Scannpositionen ausreichend lang, so kann eine Auswertung des kompletten Zeitsignals ähnlich wie bei Mikrowellenradaren erfolgen. Erfolgt die Scannbewegung mit hoher Winkelgeschwindigkeit, also einer hohen Bildrate, so reduziert sich die Lasermodulation auf eine Folge kurzer Pulse und die Signalverarbeitung auf die Auswertungen der Laufzeit einiger weniger markanter Echos.

Es ist eine Aufgabe der Erfindung, eine einfache Vorrichtung anzugeben, mit der Aufnahmen von Bildern einer Objektszene gemacht werden können, insbesondere Bilder, die eine Tiefeninformation enthalten.

Diese Aufgabe wird gelöst durch eine Vorrichtung der eingangs genannten Art, die erfindungsgemäß ein Markiermittel zum Markieren der Strahlung aus jeder der Beleuchtungselemente und ein Auswertemittel zum Unterscheiden der reflektierten Strahlung der einzelnen Beleuchtungselemente anhand der Markierung umfasst. Durch die Mehrzahl der Beleuchtungselemente kann die Objektszene gleichzeitig oder sequentiell von den Beleuchtungselementen beleuchtet werden, wobei die Markierung bei der Auswertung der aufgenommenen Bilder eine Zuordnung der empfangenen Signale zu den einzelnen Beleuchtungselementen erlaubt. Hierdurch kann auf eine Scannmechanik verzichtet werden und die Vorrichtung kann einfach gehalten bleiben. Außerdem können einfache Detektoren verwendet werden, da eine Winkelzuordnung der einzelnen Signale allein oder zusätzlich mit Hilfe der Markierung der Strahlung erfolgen kann.

Die Bilder der Objektszene können ein-, zwei- oder dreidimensional sein, flächig sein oder nur aus einzelnen, voneinander beabstandeten Bildpunkten bestehen und umfassen vorteilhafterweise eine Tiefeninformation. Die Vorrichtung ist zweckmäßigerweise ein Laserradar und die Beleuchtungselemente Laserelemente zum Abstrahlen von Laserstrahlung. Die Frequenz der Strahlung liegt insbesondere im infraroten Spektralbereich.

In einer besonders einfachen und kostengünstigen Ausführung der Vorrichtung ist die Optik dazu ausgeführt, die gesamte zu einer Bilderzeugung auszuwertende reflektierte Strahlung der Beleuchtungselemente auf eine einzige Detektorzelle des Detektors zu lenken. Dieser umfasst zweckmäßigerweise nur die diese eine Detektorzelle. Aus dem Signal der Detektorzelle, das die Bildinformationen der reflektierten Strahlung aller Beleuchtungselemente in sich vereint, kann das Auswertemittel mit Hilfe der Markierung die Bildinformation in einzelne Kanäle aufteilen, die jeweils einem Beleuchtungselement zugeordnet sind. Ist bekannt, in welchen Bildbereich oder Bildpunkt die Strahlung eines jeden Beleuchtungselements gesendet wurde, so kann ein beispielsweise zweidimensionales Bild mit Hilfe nur der einen Detektorzelle erstellt werden. Unter einer Detektorzelle kann im Folgenden ein strahlungsempfindliches Element verstanden werden, das einen oder mehrere Signalausgänge umfasst, wobei alle Signalausgänge des Elements bei einer punktförmigen Beleuchtung des Elements mit einem der Beleuchtung entsprechenden Signal reagieren.

Die Markierung kann durch eine Sendezeitmarkierung erfolgen. Hierzu ist das Markiermittel vorteilhafterweise zum Zuweisen eindeutiger Sendezeitfenster für jedes Beleuchtungselement vorgesehen. Die Sendezeitmarkierung kann durch eine zeitlich sequentielle Ansteuerung der Beleuchtungselemente erfolgen, sodass ein Zeitmultiplex unabhängiger Entfernungsmesser resultieren kann.

In einer besonders vorteilhaften Ausführungsform der Erfindung ist die Markierung eine Strahlfrequenzmarkierung, wobei die Beleuchtungselemente dazu vorgesehen sind, mit jeweils unterschiedlicher Frequenz abzustrahlen. Die Frequenz kann die Trägerfrequenz der Beleuchtungselemente sein, sodass zur Markierung die Trägerfrequenzen aller Beleuchtungselemente zueinander unterschiedlich sind. Anstelle oder zusätzlich zu den Trägerfrequenzen können Modulationsfrequenzen zur Markierung herangezogen werden. Auch die Verwendung unterschiedlicher Frequenzbereiche, beispielsweise durch unterschiedliche Frequenzchirps ist denkbar. Strahlen die Beleuchtungselemente selbst mit unterschiedlichen Strahlungs- bzw. Trägerfrequenzen, so kann die Beleuchtungseinheit zugleich Markiermittel sein. Ebenfalls denkbar ist, dass das Markiermittel eine Steuerung ist, die Strahlfrequenzen einstellt, z. B. durch Modulationen oder das Einstellen optischer Elemente.

Vorteilhafterweise ist das Auswertemittel dazu ausgeführt, aus einer Markierungsanalyse Information aus der reflektierten Strahlung einer Position in einem Bild der Objektszene zuzuordnen. So kann das Auswertemittel beispielsweise dazu ausgeführt sein, durch eine Frequenzanalyse des Signals vom Detektor die Trennung der einzelnen Winkelkanäle vorzunehmen. Durch die Erzeugung von Winkelinformation und/oder Positionsinformation aus der Markierungsanalyse kann aus einem einzigen oder wenigen Information tragenden Signalen ein Bild, insbesondere ein mehrdimensionales Bild der Objektszene erzeugt werden.

Zum Erzeugen eines insbesondere mehrdimensionalen Bilds der Objektszene ist es vorteilhaft, wenn die Optik dazu ausgeführt ist, die Strahlung der einzelnen Beleuchtungsquellen jeweils in einen eigenen Bereich der Objektszene zu lenken. Die Bereiche sind in ihrer Lage in der Objektszene verschieden und überdecken sich zweckmäßigerweise nicht oder nur wenig. Die Bereiche können mehrdimensional ausgedehnte Bereiche oder punktförmig sein und beispielsweise voneinander beabstandet sein. Zweckmäßigerweise sind die Bereiche rasterförmig angeordnet, also gleichmäßig in einem ein- oder zweidimensionalen Gitter, wobei ein Rasterpunkt ein Schwerpunkt bzw. eine geometrische Mitte eines Bereichs sein kann.

Besonders einfach kann die Optik ausgeführt sein, wenn die Beleuchtungselemente rasterförmig angeordnet sind. Die Optik kann so das Flächenraster in ein Winkelraster transformieren, das besonders einfach auswertbar ist.

Die Beleuchtungselemente können zugleich Strahlung erzeugende Beleuchtungsquellen sein, beispielsweise einzelne Laserquellen. Es ist auch möglich, dass die Beleuchtungselemente Strahlung aus einer oder mehreren Beleuchtungsquellen empfangen und mit Hilfe der Optik in die Objektszene lenken.

Vorteilhafterweise ist jedem Beleuchtungselement eine eigene Beleuchtungsquelle zugeordnet, wodurch eine Frequenzmarkierung direkt durch die Beleuchtungsquelle erfolgen kann. Es ist auch möglich, dass jedes Beleuchtungselement mit einem zugehörigen Modulationsmittel versehen ist, dass nur diesem Beleuchtungselement zugeordnet ist. Das Modulationsmittel kann ein Interferenzfilter sein, insbesondere ein durchstimmbarer Interferenzfilter, der vorteilhafterweise durch mikrooptische Elemente, die zweckmäßigerweise rasterförmig angeordnet sind, realisiert ist. Bei dieser Ausführungsform dieser Erfindung kann als Beleuchtungsquelle ein aufgeweiteter Laserstrahl verwendet werden, der zweckmäßigerweise alle Modulationsmittel bestrahlt und dessen Strahlung von allen Beleuchtungselementen verwendet werden kann. Als Modulationsmittel ist auch eine Bragg-Zelle geeignet, die mit einem Laserstrahl ausgeleuchtet werden kann. Die unterschiedlichen Beugungsordnungen besitzen unterschiedliche optische Trägerfrequenzen, die zur Markierungsanalyse vor der Detektion mit einem Lokaloszillator gemischt werden können.

In einer weiteren vorteilhaften Ausführungsform der Erfindung umfasst die Vorrichtung ein Modulationsmittel zum zeitlichen Modulieren der Strahlung der Beleuchtungselemente, wobei das Auswertemittel zum Ermitteln einer Tiefeninformation aus einem Bild der Objektszene mit Hilfe der Modulation vorgesehen ist. Die Ermittlung kann durch eine Laufzeitmessung erfolgen, insbesondere mit langen Pulsen, mit charakteristischer intrinsischer Modulation. Auch eine kontinuierliche Beleuchtung ist denkbar. Die Auswertung erfolgt zweckmäßigerweise durch eine Korrelation mit einem elektronischen Referenzsignal. Vorteilhafterweise ist die Strahlung aus jedem Beleuchtungselement moduliert in der Weise, die es gestattet, die Laufzeit eines Echos zu bestimmen. Es ist auch möglich, das zugehörige Zeitsignal in regelmäßigen Abständen abzutasten und somit ein dreidimensionales Volumenbild zu erstellen. Auf diese Weise kann eine Rasterung eines dreidimensionalen Objektraums in Voxel erfolgen. Aus der Radartechnik sind mehrere Methoden der Modulation zur Laufzeitbestimmung und Tiefenauflösung bekannt.

Es wird außerdem vorgeschlagen, dass der Detektor eine positionsempfindliche Detektorzelle aufweist. Auf diese wird zweckmäßigerweise die reflektierte Strahlung aus den Beleuchtungselementen geleitet. Die positionsempfindliche Detektorzelle kann eine Lateraleffektfotodiode sein. Die Optik ist zweckmäßigerweise so ausgeführt, dass die Strahlung aus dem gesamten beleuchteten Winkelbereich auf die Detektorzelle leitet, sodass der gesamte beleuchtete Winkelbereich erfasst werden kann.

Vorteilhafterweise ist das Auswertemittel dazu vorgesehen, aus der Markierungsinformation und den Signalen der positionsempfindlichen Detektorzelle eine Positionszuordnung von Strahlungsinformation der einzelnen Beleuchtungselemente durchzuführen. Auch auf diese Weise kann ein mehrdimensionales Bild mit Hilfe einer einzigen Detektorzelle erzeugt werden, wobei keine Information zur Senderichtung der einzelnen Beleuchtungselemente verwendet werden muss. Die Positionszuordnung im Bild bzw. Winkeldiskriminierung kann in jeder Markierung bzw. Trägerfrequenz durch die Messung der jeweiligen Flächenschwerpunkte der Bestrahlungsstärken erfolgen.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

### Es zeigen:

- Fig. 1: eine schematische Übersichtsdarstellung einer Vorrichtung zur Aufnahme von Bildern einer Objektszene mit Hilfe mehrerer Beleuchtungsquellen und einer einzigen Detektorzelle,
- Fig. 2: ein Diagramm mit zwei unterschiedlichen Beleuchtungsträgerfrequenzen,
- Fig. 3: ein Diagramm mit zwei Frequenz-Chirps unterschiedlicher Frequenzen,
- Fig. 4: ein Frequenzdiagramm mit scharfen Frequenzen analog zu Figur 2,
- Fig. 5: ein Frequenzdiagramm mit Frequenzbereichen analog zu Figur 3 und
- Fig. 6: eine schematische Darstellung einer positionsempfindlichen Detektorzelle.

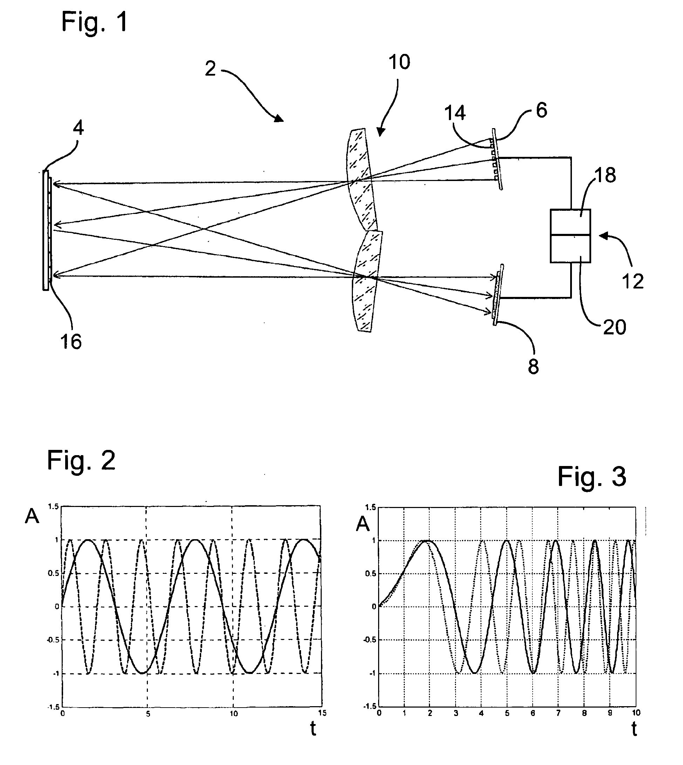

Figur 1 zeigt eine Vorrichtung 2 zur Aufnahme von Bildern einer Objektszene 4 mit einer Beleuchtungseinheit 6, einem Detektor 8 und einer Optik 10 zum Lenken von Strahlung aus Beleuchtungseinheit 6 in die Objektszene 4 und von der Objektszene 4 reflektierter Strahlung auf den Detektor 8. Bei dieser Beispielkamera ist die Sende- und Empfangsapertur zum besseren Verständnis getrennt dargestellt. Eine gemeinsame Apertur ist ebenfalls möglich und im Vergleich zu einem Pulssystem mit weniger Aufwand in der optischen Isolation verbunden. Die Spitzenleistung der insbesondere Laserstrahlung kann niedrig gehalten werden, da die notwendige Energie durch die Pulslänge und die Kodierung zur Laufzeitmessung durch eine zeitliche Modulation erfolgt.

Die Beleuchtungseinheit 6 umfasst ein rechtwinkliges Raster aus einer Vielzahl von Beleuchtungselementen 14, die jeweils als Laserstrahler ausgeführt sind und somit gleichzeitig Beleuchtungsquellen bilden. Mit Hilfe dieses Laserrasters wird die Objektszene 4 beleuchtet, wobei die Ansteuerung des Laserrasters mit Hilfe einer Steuereinheit 12 erfolgt. In Figur 1 sind nur die Hauptstrahlen der optischen Abbildung des Laserrasters auf den Detektor 8 dargestellt. Anstelle des Laserrasters kann auch ein Raster von Leuchtdioden oder eine andere rasterförmige Beleuchtungseinheit verwendet werden. Bei allen Beleuchtungsrastern ist es vorteilhaft, wenn jedes Beleuchtungselement des Rasters individuell markiert ist.

Die Strahlung aus der Beleuchtungseinheit 6 wird durch die Optik 10 in die Objektszene 4 geführt, wobei jedes Beleuchtungselement 14 einen Bereich 16 der Objektszene beleuchtet. Die Zuweisung eines jeden Bereichs 16 zu jeweils einem Beleuchtungselement 14 ist eindeutig, sodass jedes Beleuchtungselement 14 genau einen Bereich 16 beleuchtet. Die Bereiche 16 sind rasterförmig in der Objektszene 4 angeordnet, insbesondere in der gleichen Form wie die rasterförmige Anordnung der Beleuchtungselemente 14. Die Objektszene 4 bzw. die einzelnen Bereiche 16 werden durch die Optik 10 auf den Detektor 8 abgebildet. Hierdurch wird jedem Bereich 16 der Objektszene 4 ein Bildbereich auf dem Detektor 8 zugewiesen, sodass die rasterförmig angeordneten Bereiche 16 auch rasterförmig auf dem Detektor 8 abgebildet werden.

Die Strahlung aus den einzelnen Beleuchtungselementen 14 ist mit Hilfe eines elektronischen Markiermittels in der Form markiert, dass jedes Beleuchtungselement 14 durch die von ihm emittierte Strahlung identifizierbar ist. Bei dem in Figur 1 gezeigten Ausführungsbeispiel ist die Strahlung intrinsisch moduliert, indem jedem Beleuchtungselement eine individuelle Trägerfrequenz zugewiesen ist. Hierbei ist die Strahlung bereits bei ihrer Entstehung im Halbleiter moduliert. Alternativ sind auch andere Modulationen denkbar, z. B. externe Modulationen, wie durch ein Hologramm oder einen räumlichen Lichtmodulator, mit dem Strahlung eine räumliche Modulation aufgeprägt wird. Auch mikrooptische, durchstimmbare Interferenzfilter sind denkbar, deren optische Abstände der reflektierenden Oberflächen unabhängig voneinander moduliert werden.

Zwei Beispiele möglicher Markierungen sind in den Figuren 2 und 3 wiedergegeben. In den Figuren 2 und 3 sind die Amplituden A von Strahlung aus zwei Beleuchtungselementen 14 über die Zeit t dargestellt. Die Markierungen sind in beiden Beispielen Frequenzmodulationen. In Figur 2 ist die Trägerfrequenz beider Beleuchtungselemente 14 konstant jedoch unterschiedlich. In Figur 3 strahlen beide Beleuchtungselemente 14 mit jeweils einem Frequenzchirp ab, die jeweils einen festen Frequenzbereich überdecken.

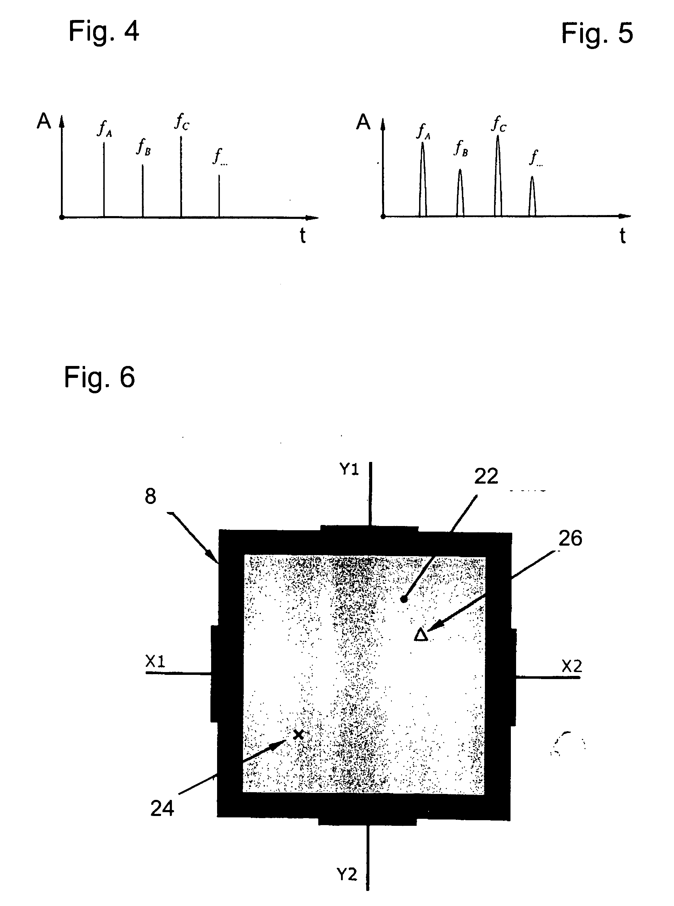

Die scharfen Frequenzen bzw. Frequenzbereiche sind in den Diagrammen aus Figur 4 und Figur 5 dargestellt. Die scharfen Frequenzen f_{A}, f_{B}, f_{C}, f... sind soweit voneinander entfernt, dass sie durch das Auswertemittel 20 voneinander getrennt ausgewertet werden können. In gleicher Weise sind die in Figur 5 gezeigten Frequenzbereiche bzw. Frequenzbänder der Frequenzchirps nicht überlappend ausgeführt, sondern so weit voneinander beabstandet, dass auch sie eindeutig vom Auswertemittel 20 getrennt voneinander ausgewertet werden können.

Im Frequenzchirp-Verfahren wird eine Grundfrequenz im zeitlichen Verlauf linear erhöht, wie in Figur 3 dargestellt ist. Das Linienspektrum der Trägerfrequenzen wird durch den Chirp in Frequenzbänder verbreitert, die in Figur 5 gezeigt sind. Die Breite der Frequenzbänder legt den Mindestabstand zwischen den Trägerfrequenzen der einzelnen Beleuchtungselemente 14 fest.

Alternativ oder zusätzlich zu einer Frequenzmodulation wären auch einfache Phasenmessungen, einer Amplitudenmodulation, eine Phasenmodulation oder Pulskompressionsverfahren geeignet.

Der Detektor 8 ist ein Einzellendetektor mit einer einzigen Detektorzelle, auf die von der Objektszene 4 reflektierte Strahlung aller Beleuchtungselemente 14 geführt wird. Der Detektor 8 ist zweckmäßigerweise in einer Bildebene der Optik 10 angeordnet, wobei eine Abweichung von maximal 10 % der Brennweite der Optik 10 als noch in der Bildebene liegend akzeptabel sind.

Das vom Detektor 8 ausgegebene und aus der Beleuchtung resultierende Signal wird von einem Auswertemittel 20 ausgewertet, das Teil der Steuereinheit 12 sein kann. Dieses Signal beinhaltet Information aus allen beleuchteten Bereichen 16, da der Detektor 8 Strahlungsinformation aus allen beleuchteten Bereichen 16 in ein oder mehrere Signale zusammenfasst, die jeweils Information aus allen Bereichen 16 enthält. Aus dem oder den einzelnen Signalen ist jedoch durch die Markierung eine Unterscheidung der einzelnen Beleuchtungselemente 14 bzw. Bereiche möglich. Diese Unterscheidung wird durch das Auswertemittel 20 vorgenommen. Auf diese Weise kann das Auswertemittel 20 Information aus den einzelnen Bereichen 16 jeweils einem Kanal zuordnen, aus denen - durch die bekannte Anordnung der Bereiche 16 in der Objektszene 4 - ein Bild der Objektszene 4 zusammengesetzt werden kann. Jeder Bereich 16 kann hierbei ein Pixel liefern, sodass aus der Gesamtheit der Pixel ein beispielsweise zweidimensionales Bild erzeugt werden kann.

Eine zusätzliche Positionsdiskriminierung bzw. Winkeldiskriminierung ist möglich bei der Verwendung einer positionsempfindlichen Detektorzelle, beispielsweise einer Lateraleffektfotodiode, wie in Figur 6 detaillierter dargestellt ist. Bei einem Lichteinfall auf die aktive Fläche 22 der Fotodiode wird ein Fotostrom erzeugt, der in Richtung des p- und des n-dotierten Gebietes abfließt. Im Gegensatz zu einer einfachen Fotodiode verfügt eine Lateraleffektfotodiode über mehrere elektrische Kontakte, beispielsweise vier elektrische Kontakte bzw. Elektroden X₁, X₂, Y₁, Y₂. Hierdurch kommt es zu einer Aufteilung des Fotostroms an diesen Elektroden in Abhängigkeit von der Position des Schwerpunkts der Bestrahlungsstärke des Lichtflecks bzw. der Bestrahlung. Die Position in x- und y-Richtung wird durch Bildung der Stromdifferenz zwischen zwei gegenüberliegenden Elektroden ermittelt. Durch Normierung auf den Gesamtstrom wird das Positionssignal unabhängig von der einfallenden Lichtintensität. Auf diese Weise kann eine Bestrahlung mit dem Schwerpunkt in einer ersten Position 24 von der Bestrahlung mit dem Schwerpunkt in einer zweiten Position 26 unterschieden werden.

Die positionsempfindliche Detektorzelle misst den Schwerpunkt der Bestrahlungsstärke innerhalb der Detektorfläche 22, beispielhaft dargestellt anhand von zwei verschiedenen Positionen 24, 26. Die innere Struktur der Bestrahlungsstärkeverteilung, z. B. die Bildinformation, kann mit der Detektorzelle extrahiert werden, wenn die Strukturteile mittels einer Markierung, z. B. zeitlicher oder frequenzartiger Merkmale, voneinander trennbar sind. Unterscheidet sich beispielsweise jedes Beleuchtungselement 14 durch eine andere Trägerfrequenz, so entspricht jede Trägerfrequenz einer Richtung im Objektraum. Das Auswertemittel 20 separiert die einzelnen Trägerfrequenzen in unterschiedliche Kanäle, die unabhängig voneinander prozessiert werden. Dadurch erfolgt eine Bestimmung der Positionen 24, 26 auf der aktiven Fläche 22 der Detektorzelle für jede detektierte Trägerfrequenz. Durch die Abbildung der Objektszene 4 auf den Detektor 8 bzw. dessen Detektorzelle entspricht jede Position 24, 26 einer Position innerhalb der Objektszene 4 bzw. einem Bereich 16.

Durch die Trennbarkeit der Frequenzen und die dadurch mögliche Positionsbestimmung auf der aktiven Fläche 22 des Detektors 8 ist somit eine Positionsbestimmung bzw. Winkelbestimmung der einzelnen Bereiche 16 auch ohne die Kenntnis oder Verwendung der Abstrahlungsinformation der Beleuchtungseinheit 6 möglich. Ein Bild der Objektszene 4 kann auch dann zusammengesetzt werden, wenn die Art der Abstrahlung unbekannt oder gestört ist.

Zusätzlich zu der Markierung ist die Strahlung von jedem Beleuchtungselement 14 so moduliert, dass es möglich ist, die Laufzeit eines Echos zu bestimmen und somit mit Hilfe des Echoverfahrens Entfernungsbilder zu erzeugen. Es ist auch möglich, das zugehörige Zeitsignal in regelmäßigen Abständen abzutasten und somit ein dreidimensionales Volumenbild durch eine Rasterung des dreidimensionalen Objektraums in Voxel zu erstellen. Aus der Radartechnik sind mehrere Methoden der Modulation zur Laufzeitbestimmung und Tiefenauflösung bekannt. Ein weiteres mögliches Verfahren zur Gewinnung von dreidimensionaler Information ist eine Pseudo-Noise-Codierung.

Nach der Gewinnung der Tiefeninformation kann diese mit den Positionsdaten bzw. Winkel-Winkel-Daten der Positionsbestimmung fusioniert werden. Das Ergebnis der Datenverschmelzung ist ein nach Winkel und Entfernung aufgelöstes dreidimensionales Bild.

### Bezugszeichenliste

- 2: Vorrichtung
- 4: Objektszene
- 6: Beleuchtungseinheit
- 8: Detektor
- 10: Optik
- 12: Steuereinheit
- 14: Beleuchtungselement
- 16: Bereich
- 18: Markiermittel
- 20: Auswertemittel
- 22: Aktive Fläche
- 24: Position
- 26: Position
- X₁, X₂: Elektrode
- Y₁, Y₂: Elektrode

## Patentansprüche

1. Vorrichtung (2) zur Aufnahme von Bildern einer Objektszene (4) mit einer Beleuchtungseinheit (6) zum Beleuchten der Objektszene (4) mit mehreren Beleuchtungselementen (14) und einer Optik (10) zum Lenken von aus der Objektszene (4) reflektierter Strahlung der Beleuchtungselemente (14) auf einen Detektor (8), **gekennzeichnet**
**durch** ein Markiermittel (18) zum Markieren der Strahlung aus jedem der Beleuchtungselemente (14) und ein Auswertemittel (20) zum Unterscheiden der reflektierten Strahlung der einzelnen Beleuchtungselemente (14) anhand der Markierung.

2. Vorrichtung (2) nach Anspruch 1,
**dadurch gekennzeichnet,**
**dass** die Optik (10) dazu ausgeführt ist, die gesamte zu einer Bilderzeugung auszuwertende reflektierte Strahlung der Beleuchtungselemente (14) auf eine einzige Detektorzelle des Detektors (8) zu lenken.

3. Vorrichtung (2) nach Anspruch 1 oder 2,
**dadurch gekennzeichnet,**
**dass** die Markierung eine Sendezeitmarkierung ist und das Markiermittel zum Zuweisen eindeutiger Sendezeitfenster für jedes Beleuchtungselement (14) vorgesehen ist.

4. Vorrichtung (2) nach einem der vorhergehenden Ansprüche,
**dadurch gekennzeichnet,**
**dass** die Markierung eine Strahlfrequenzmarkierung ist und die Beleuchtungselemente (14) dazu vorgesehen sind, mit jeweils unterschiedlicher Frequenz abzustrahlen.

5. Vorrichtung (2) nach einem der vorhergehenden Ansprüche,
**dadurch gekennzeichnet,**
**dass** das Auswertemittel (20) dazu ausgeführt ist, aus einer Markierungsanalyse Information aus der reflektierten Strahlung einer Position in einem Bild der Objektszene (4) zuzuordnen.

6. Vorrichtung (2) nach Anspruch 5,
**dadurch gekennzeichnet,**
**dass** das Auswertemittel (20) dazu vorgesehen ist, mit Hilfe mehrerer Positionszuordnungen ein Bild zu erzeugen.

7. Vorrichtung (2) nach einem der vorhergehenden Ansprüche,
**dadurch gekennzeichnet,**
**dass** die Optik (10) dazu ausgeführt ist, die Strahlung der einzelnen Beleuchtungselemente (14) jeweils in einen eigenen Bereich (16) der Objektszene (4) zu lenken

8. Vorrichtung (2) nach einem der vorhergehenden Ansprüche,
**dadurch gekennzeichnet,**
**dass** die Optik (8) dazu ausgeführt ist, Strahlung aus den Beleuchtungselementen (14) rasterförmig in die Objektszene (4) zu lenken, wobei jedes Beleuchtungselement (14) genau einen Rasterpunkt beleuchtet.

9. Vorrichtung (2) nach einem der vorhergehenden Ansprüche,
**dadurch gekennzeichnet,**
**dass** die Beleuchtungselemente (14) rasterförmig angeordnet sind.

10. Vorrichtung (2) nach einem der vorhergehenden Ansprüche,
**dadurch gekennzeichnet,**
**dass** jedes Beleuchtungselement (14) eine eigene Beleuchtungsquelle umfasst.

11. Vorrichtung (2) nach einem der vorhergehenden Ansprüche,
**dadurch gekennzeichnet,**
**dass** jedes Beleuchtungselement (14) mit einem Modulationsmittel versehen ist, das nur diesem Beleuchtungselement (14) zugeordnet ist.

12. Vorrichtung (2) nach einem der vorhergehenden Ansprüche,
**gekennzeichnet**
**durch** ein Modulationsmittel zum zeitlichen Modulieren der Strahlung der Beleuchtungselemente (14), wobei das Auswertemittel (20) zum Ermitteln einer Tiefeninformation aus einem Bild der Objektszene (4) mit Hilfe der Modulation vorgesehen ist.

13. Vorrichtung (2) nach einem der vorhergehenden Ansprüche,
**dadurch gekennzeichnet,**
**dass** der Detektor (8) eine positionsempfindliche Detektorzelle aufweist.

14. Vorrichtung (2) nach Anspruch 13,
**dadurch gekennzeichnet,**
**dass** das Auswertemittel (20) dazu vorgesehen ist, aus der Markierungsinformation und den Signalen der positionsempfindlichen Detektorzelle eine Positionszuordnung von Strahlungsinformation der einzelnen Beleuchtungselemente (14) durchzuführen.
